(19) Europäisches Patentamt
European Patent Office
Office européen des brevets

(11) Publication number: **0 363 740 A1**

## (12) EUROPEAN PATENT APPLICATION

(21) Application number: **89117936.8**

(22) Date of filing: **28.09.89**

(51) Int. Cl.5: **B23K 35/26 , //C22C13/00**

(30) Priority: **11.10.88 JP 253892/88**

(43) Date of publication of application: **18.04.90 Bulletin 90/16**

(84) Designated Contracting States: **DE GB NL**

(71) Applicant: **KAWAKATSU, Ichiro**
**30-13, Saginomiya 3-chome**
**Nakanoku, Tokyo 165(JP)**

(72) Inventor: **KAWAKATSU, Ichiro**
**30-13, Saginomiya 3-chome**
**Nakanoku, Tokyo 165(JP)**

(74) Representative: **Bohnenberger, Johannes, Dr. et al**
**Meissner, Bolte & Partner**
**Widenmayerstrasse 48 Postfach 86 06 24**
**D-8000 München 86(DE)**

## (54) Low temperature melting solder alloys.

(57) A low tempereture melting solder alloy comprises 20 to 45 % by weight of Pb, 3 to 16 % by weight of Bi, 3 to 16 % by weight of In, and the rest which includes Sn. The low temperature solder alloy has a relatively low melting poin and a relativeiy narrow temperature range between a liquid and a solid phase.

FIG. 1

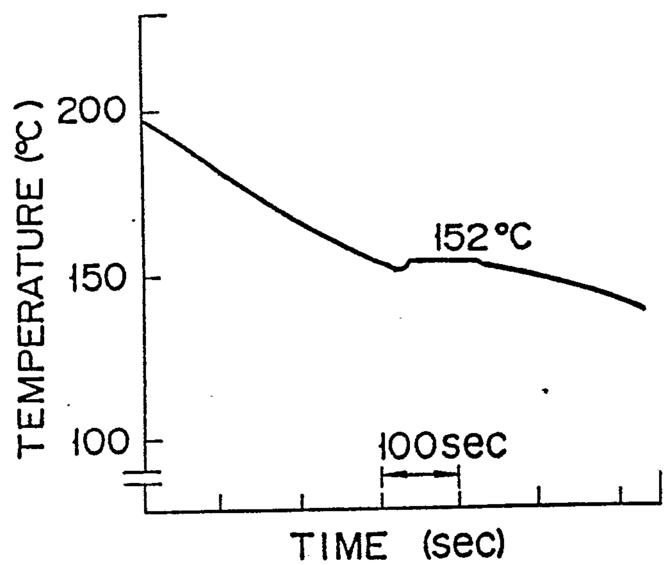


EP 0 363 740 A1

# Low tempereture melting solder alloys

The present invention relates to an alloy including four elements, Pb-Sn-Bi-In, and an alloy including not only these four elements but also an Ag additive. They are applicable to solderability used in a printed curcuit board to join its circuit elements.

An electronic device is generally produced by placing circuit elements on their right position of a printed-board and by electrically connecting them with a printed current path of the board through solder to form a printed circuit. Generally an Sn-Pb binary alloy is used as solder. However, heat generated in soldering process many deteriorate some elements in their performance, because they are susceptible to heat. Therefore, it is desirable that a solder alloy has a lower melting point than that of an eutectic alloy having Sn 63Wt% and pb 37wt%.

Moreover, one side soldering is often insufficient for a printed board as an electronic circuit becomes highly dense, so that both side soldering must be employed. That is, after one side of a printed board has been treated with solder, the other side is treated with it, which is called step soldering

From these point of view, it is desirable that a solder alloy is low in melting point. However, a proper solder alloy is not yet developped at present.

For practical use a low temperature melting solder alloy desctibed above is required to have a low melting point, a good wetting property with respect to the base metal while being melted, suitable mechanical properties for a solder alloy and a solder joint, suitable workabilities, and a good corrosion resistances. The solder alloy is also required to be economical in its cost. Moreover, as for the melting properties, not only the melting point should be low in temperature, but also a temperature range between a melting point and a solidifying point should be narrow. That is, the temperature difference between liquid and solid phases is desirable to be as small as possible.

Most of the well-known low temperature melting solder alloys contain not only Sn and Pb, but also much quantities of expensive elements such as Bi and In in order to decrease their melting point. They are thus expensive and they often show less elongations. They even brittle in tensile test. Because of their difficulties to handle with them, they are not widly applied yet.

An object of the present invention is to provide a low temperature solder alloy having a relatively low melting point and a relatively narrow temperature range between liquid and solid phases.

The above object of the invention is achieved by a low temperature solder alloy comprising 20 to 45 % by weight of Pb, 3 to 16 % by weight of Bi, 3 to 16 % by weight of In, and the rest which includes Sn.

A low temperature melting solder alloy in the invention shows the following effects: Due to an addition of Bi and In additives, an Sn-Pb binary alloy, having a limited range of Sn and Pb contents become a quaternary alloy, with its melting point being lowered and its melting range being narrowed, and thus it melts easily and readily flows during soldering.

The chemical composition of the low temperature melting solder alloy of the invention is limited as follows:

A 45 Wt% excess of Pb content raises a melting point due to the occurrence of a Pb-based solid solution. Therefore, the Pb contant must be limited up to 45 Wt%. On the other hand, if the Pb content is less than 20 Wt%, an Sn-based solid solution takes place, and they also raise the melting point.

The reasons why each of the Bi and In contents must be limited between 3 to 16 Wt% is as follows: If each of Bi and In is present more than 16 Wt% the solder alloy will be deteriorated in not only its machinability and mechanical property, but also the strength of solder joint. Furthermore the alloy becomes very expensive.

On the other hand, if Bi and In contents are each less than 3 Wt%, they are not effective to reduce a melting point of Sn-Pb binary alloy.

Further, an Ag addition facilitaes an effective reduction in melting point of Sn-Pb-Bi-In quaternary alloy and an effective protection from oxidation of a melting alloy surface when the quaternary alloy described above is being melted. The Ag addition up to 5 Wt% is allowable.

Moreover, one of the elements such as up to 5 Wt% of Cu ( I group), up to 4 Wt% of Cd ar Hg ( II group), up to 4 Wt% of Ga or Ti ( III grop), up to 0.1 Wt% of P ( V group), and up to 0.5 Wt% of Sd ( V group), or combination of two elements selected from these elements can be added to the solder alloy.

This invention can be more fully understood from the following detailed description when taken in conjunction with the accompanying drawings, in which:

Fig.1 shows the temperature-time curve on cooling of Sn-Pb-Bi-In quaternary alloys according to the first embodiment as a result of measurement by an auto-recorded thermal analyser;

Fig.2 shows the temperature-time curve on cooling of Sn-Pb-Bi-In quaternary alloys according to the second embodiment;

Fig.3 shows the temperature-time curve on cooling of Sn-Pb-Bi-In quaternary alloys according to the third embodiment;

Fig.4 shows the temperature-time curve on cooling of Sn-Pb-Bi-In quaternary alloys according to the fourth embodiment; and

Fig.5 shows the temperature-time curve on cooling of Sn-Pb-Bi-In quaternary alloys according to the fifth embodiment.

Preferred embodiments or examples of the low temperature melting solder alloys of the present invention will now be described in detail with reference to the accompanying drawings.

(Example 1)

The first solder alloy including Sn 50, Pb 30, Bi 10 and In 40 Wt% was produced and measured by an auto-recorded thermal analyser. The temperature-time curve on cooling of the first alloy is shown in Fig.1.

The melting point was 152° C which is quite low in temperature. It is apparent from Fig.1 that the temperature difference between a liquid phase and a solid phase is very small. The temperature-time curve in Fig.1 shows that this example has the pattern of single point solidification in the same way as the pure metals and the eutectic alloys.

The wetting property of the alloy during soldering was measured by a surface tension balance (the Menisco graph) employing RMA rosin flux. The wetting time lasted 2 to 3 seconds at 180° C.

On the other hand, in the Sn-Pb eutectic solder alloy, the wetting time at 220 °C lasts 2 to 3 seconds. Thus, the solder alloy of the first example in the present invention may be used to perform foldering at about 40 °C lower temperature.

As for the mechanical properties of the first solder alloy, the tensile strength is 3.66kg/mm$^2$, and the elongation percentage is 117.0% at the room temperature. And it shows the adequate machinabilities at the room temperature and its mechanical properties are equivalent to those of Sn-Pb eutectic alloys.

(Example 2)

The second solder alloy including Sn 56, Pb 34, Bi 5 and In 5 Wt% was produced and measured by the thermal analyser described above. The temperature-time curve on cooling of the second alloy is shown in Fig.2.

It is evident that the liquid phase temperature is at 163 °C and the solid phase temperature at 155° C. Therefore, the second alloy has a low melting point, and the temperature difference between the liquid and solid phase is only 8° C.

(Example 3)

The third solder alloy including Sn 53, Pb 32, Bi 5 and In 10 Wt% was produced. As described above, the temperature-time curve of the third alloy shown in Fig.3 was obtained.

It is evident that the melting point of the third alloy is low and at about 158° C. The temperature difference between the liquid and the solid phase is not apparent. This example shows the pattern of single point solidification the same as that of the example 1.

(Example 4)

The fourth solder alloy including Sn 54, Pb 31, Bi 7.5 and In 7.5 wt% was produced. As described above, the temperature-time curve of the fourth alloy shown in Fig.4 was obtained. It is evident that the melting point of the fourth alloy is low and at about 158° C. It is difficult to find the temperature difference between the liquid and the solid phases and it seems to be the pattern of single point solidification as same as that of the example 1.

(Example 5)

Ag of 1.5 wt% was added to the base solder alloy including Sn 50, Pb 30, Bi 10 and In 10 Wt% to form a new alloy. As described above the temperature time curve shown in Fig.5 was obtained.

It is evident that the Ag addition has an effect of lowering the melting point of the alloy to 148° C.

The temperature difference between the liquid and the solid phases is not apparent and Fig.5 presents the pattern of single point solidification as same as that of the examples 1, 3 and 4.

Moreover, one of the elements such as up to 5 Wt% of Cu ( I group), up to 4 Wt% of Cd or Hg ( II group), up to 4 Wt% of Ga or Ti ( II grop), up to 0.1 Wt% of P ( V group). and up to 0.5 Wt% of Sd ( V group), or combination of the elements selected from these elements can be added to the solder alloy.

The low temperature melting solder alloys, the Sn-Pb-Bi-In quaterary alloy and the alloy with Ag additions according to the above-mentioned axamples do not contain much quantity of expensive metal elements, and they are 20 to 35° C lower in melting point and soldering temperature than the conventional Sn-Pb solder alloys.

Their solderability is almost equivalent to that of the conventional solders and as for the mechanical preperties they have the high tension and joint strength and the proper machinabilities-(workabilites), too.

Since the solder alloys described obove can be used at a low temperature, they are quite suitable for the improvement of the deterioration of the components, the both-side soldering and the step soldering on the printed circuit boad.

## Claims

1. A low tempereture melting solder alloy characterized by comprising 20 to 45 % by weight of Pb, 3 to 16 % by weight of Bi, % to 16 % by weight of In, and the rest which includes Sn.

2. The low tempereture melting solder alloy according to claim 1, characterized by further comprising up to 5% by weight of Ag.

FIG. 1

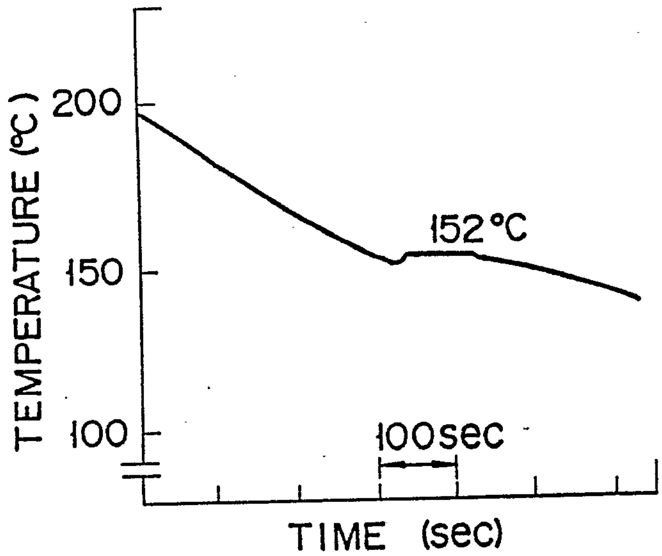


FIG. 2

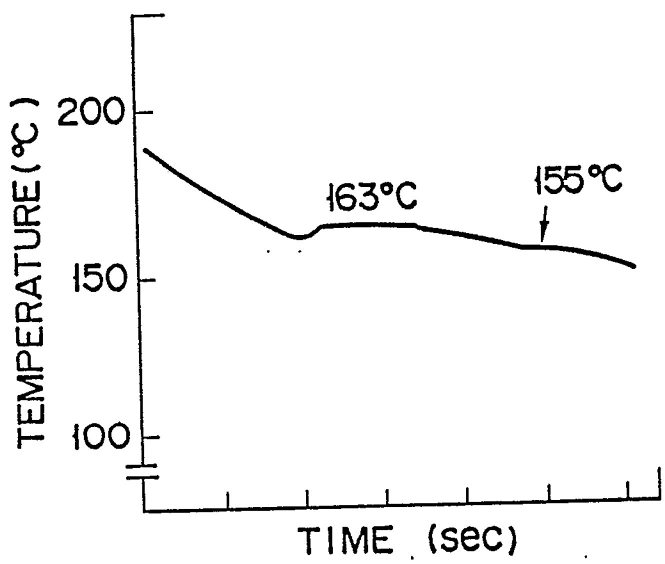


FIG. 3

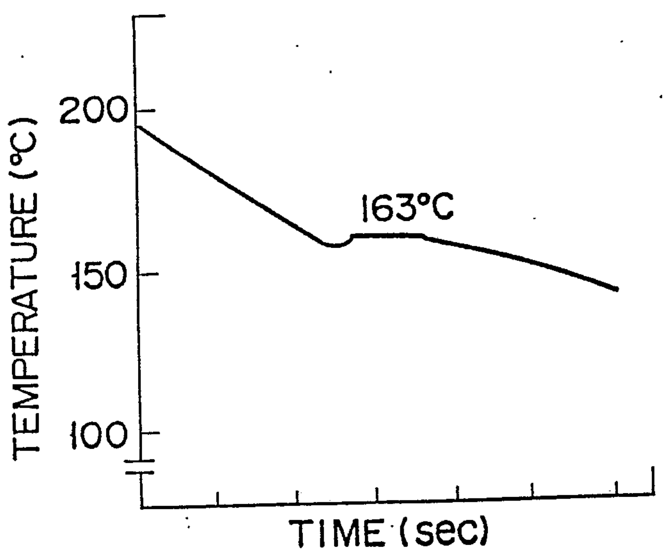

FIG. 4

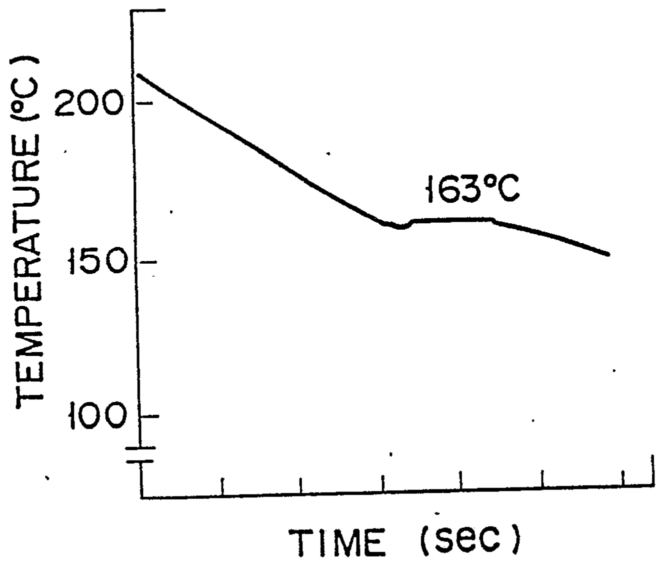
TEMPERATURE (°C)
200
150
100
163°C
TIME (sec)

FIG. 5

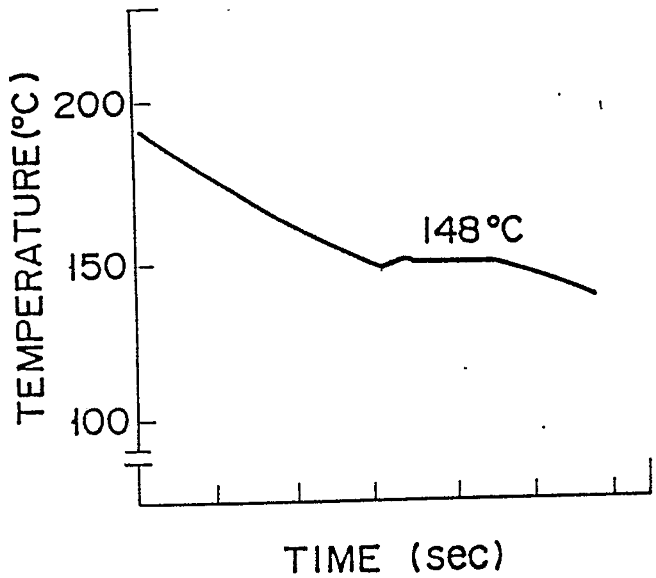
TEMPERATURE (°C)
200
150
100
148°C
TIME (sec)

European Patent Office

# EUROPEAN SEARCH REPORT

Application Number

EP 89 11 7936

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 12, no. 352 (M-744), 21st September 1988; & JP-A-63 112 092 (SONY CORP.) 17-05-1988 * Abstract * --- | 1 | B 23 K 35/26 // C 22 C 13/00 |
| X | PATENT ABSTRACTS OF JAPAN, vol. 11, no. 131 (M-584)[2578], 24th April 1987; & JP-A-61 273 296 (TARUCHIN K.K.) 03-12-1986 * Abstract * --- | 1-2 | |
| X | PATENT ABSTRACTS OF JAPAN, vol. 10, no. 55 (M-458)[2112], 5th March 1986; & JP-A-60 203 394 (TARUCHIN K.K.) 14-10-1985 * Abstract * --- | 1-2 | |
| A | DE-C-3 730 764 (DEMETRON) ----- | | |

TECHNICAL FIELDS SEARCHED (Int. Cl.5)

B 23 K

The present search report has been drawn up for all claims

| Place of search | Date of completion of the search | Examiner |
|---|---|---|
| THE HAGUE | 21-12-1989 | MOLLET G.H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document